# EUROPÄISCHE PATENTSCHRIFT

(11) **EP 3 897 091 B1**
(45) Veröffentlichungstag und Bekanntmachung des Hinweises auf die Patenterteilung: **28.06.2023**
(21) Anmeldenummer: 19832329.7
(22) Anmeldetag: 17.12.2019
(51) Int. Cl.: A01C 23/00

(54) **VERTEILERVORRICHTUNG FÜR FESTSTOFFFÜHRENDE FLÜSSIGKEITEN**
DISTRIBUTION DEVICE FOR LIQUIDS CONTAINING SOLIDS
DISPOSITIF DE DISTRIBUTION POUR LIQUIDES CONTENANT DES SOLIDES

(30) Priorität: 17.12.2018 DE 202018107208 U
(43) Veröffentlichungstag der Anmeldung: 27.10.2021
(73) Patentinhaber: Vogelsang GmbH & Co. KG, 49632 Essen (DE)
(72) Erfinder: KRAMPE, Paul, 49632 Essen (DE); LUCKS, Carsten, 49632 Essen (DE); PETERSEN, Thies, 49632 Essen (DE)
(74) Vertreter: Eisenführ Speiser
(86) Internationale Anmeldenummer: PCT/EP2019/085708
(87) Internationale Veröffentlichungsnummer: WO 2020/127310

(56) Entgegenhaltungen:
- EP-A1- 3 175 696
- DE-U1- 29 715 481
- FR-A1- 2 851 482
- US-A1- 2006 042 703

## Beschreibung

Die Erfindung betrifft eine Verteilervorrichtung für feststoffhaltige Flüssigkeiten, umfassend eine Verteilerkammer mit einer Einlassöffnung, die in einen Kammerinnenraum der Verteilerkammer mündet, wobei die Verteilerkammer eine erste Stirnwand mit mehreren Anschlussstutzen und eine seitlich zu der Stirnwand angeordnete erste Seitenwand aufweist, eine erste Lochmesserscheibe mit mehreren Auslassöffnungen, welche den Kammerinnenraum mit den mehreren Anschlussstutzen verbinden, eine Messerantriebswelle, die drehbar um eine Antriebswellenachse gelagert ist, einen Rotor, der mit der Messerantriebswelle zur Übertragung eines Drehmoments um die Messerantriebswelle gekoppelt ist, ein erstes Schneidmesser, welches mit dem Rotor verbunden ist und eine Schneidkante aufweist, welche an der ersten Lochmesserscheibe anliegt und mittels des Rotors relativ zu der Lochmesserscheibe bewegbar ist und eine Spannvorrichtung, die ausgebildet ist, um eine Anpresskraft zwischen dem ersten Schneidmesser und der ersten Lochmesserscheibe zu bewirken, und die vorzugsweise mit dem Rotor lösbar verbunden ist. Des Weiteren betrifft die Erfindung ein Verfahren zur Wartung einer Verteilervorrichtung für feststoffhaltige Flüssigkeiten.

Ein typisches Anwendungsgebiet solcher Verteilervorrichtungen findet sich in der Landwirtschaftstechnik, wo es in vielen Anwendungen darauf ankommt, Flüssigkeiten, die Feststoffe mit sich führen, von einer Leitung auf mehrere Leitungen zu verteilen, beispielsweise um Gülle als Nährstoffreservoir über ein Schleppschlauchgestänge auf einem Feld auszubringen.

Ein grundsätzliches Problem, das bei solchen Verteilervorrichtungen auftritt, liegt in dem Umstand begründet, dass die feststoffbeladene Flüssigkeit systembedingt aus einer Zuleitung mit großem Querschnitt auf mehrere Zuleitungen mit jeweils kleinem Querschnitt verteilt werden muss. Aufgrund der Feststoffe in der Flüssigkeit tritt bei diesem systembedingten Prozess die Gefahr von Verstopfungen in den kleinen Querschnitten auf. Es ist grundsätzlich bekannt, in Verteilervorrichtungen für feststoffbeladene Flüssigkeiten eine Schneideinrichtung zu integrieren, um dieses Problem zu lösen. Durch eine solche Schneideinrichtung werden die Feststoffe in der Flüssigkeit zerkleinert, was die Gefahr von Verstopfungen in den kleinen Durchtrittsquerschnitten in bzw. hinter der Verteilervorrichtung verringert. Aus EP 2850 928 B1 ist eine in die Verteilervorrichtung integrierte Schneideinrichtung bekannt, welche Schneidmesser aufweist, die in Zusammenwirkung mit einer Lochscheibe eine Scherwirkung auf die Feststoffe ausüben, wenn diese durch die Auslassöffnungen der Lochscheibe hindurchtreten. Hierbei wird das Schneidmesser relativ zu der Lochscheibe bewegt, um diese Scherwirkung zu erzeugen. Die Auslassöffnungen in der Lochscheibe korrespondieren hierbei mit den Auslassöffnungen der Verteileinrichtung und stehen mit diesen Auslassöffnungen in Fluidverbindung. DE 297 15 481 U1 beschreibt ein Gerät zum Verteilen von inhomogenen Flüssigkeiten auf landwirtschaftliche Nutzflächen, bestehend aus einem oder mehreren an den Tank eines Güllewagens angeschlossenen Verteilern und aus einer Mehrzahl von an diese angeschlossene Austragsleitungen.

Ein weiteres Problem, welches bei Verteilervorrichtungen der eingangs genannten Art auftritt, liegt in der Abnutzung der Schneidkanten von den Schneidmessern. Eine Abnutzung der Schneidkanten, die mit zunehmender Benutzungsdauer auftritt, bewirkt, dass die Schneidfähigkeit der Kanten abnimmt und die Feststoffe nicht mehr bestimmungsgemäß zerkleinert werden können, wodurch es zu Verstopfungen innerhalb der Verteilerkammer und in den Auslassöffnungen oder den Schläuchen kommen kann. Dadurch wird die Funktionsweise der Verteilervorrichtung eingeschränkt oder die Verteilervorrichtung ist überhaupt nicht mehr funktionsfähig, wodurch regelmäßige Erneuerungen der Schneidkanten bzw. der Schneidmesser erforderlich sind. Aus EP 2850 928 B1 ist eine Verteilervorrichtung bekannt, bei der ein Austausch der Bauteile, die sich in einer Verteilerkammer befinden, möglich ist. Die Schneidmesser sind hierbei an dem Rotor auf dessen beiden axialen Stirnseiten befestigt und liegen für die Schneidwirkung an Lochmesserplatten an, die an einer Stirnwand befestigt sind. Zum Entfernen des Rotors von der Messerantriebswelle ist es möglich, die Stirnwand zu demontieren, sodass der Rotor axial entlang der Messerantriebswelle abgezogen werden kann. Der Rotor, an dem die Schneidmesser befestigt sind, kann dann von der Messerantriebswelle gelöst und axial entlang der Messerantriebswelle aus der Verteilerkammer entnommen werden. Ein Nachteil bei dieser Bauweise ist, dass der Rotor mit den daran befestigten Schneidmessern nur unter erschwerter Handhabung im Einsatzgebiet aus der Verteilerkammer entnommen werden kann. Durch die Vielzahl der angeschlossenen Schläuche ist zudem die Beweglichkeit der Stirnwand stark eingeschränkt und damit zum Entfernen der Stirnwand und zum Entnehmen des Rotors aus der Verteilerkammer ein hoher Kraft- und Zeitaufwand notwendig. Des Weiteren nimmt die Anzahl an Zusatzelementen an Verteilervorrichtungen aufgrund der wachsenden Anforderungen an die präzise Ausbringung von Düngemitteln wie Gülle zu. Um eine präzise Bewirtschaftung ("Precision Farming") zu ermöglichen und beispielsweise eine in der Ausbringbreite variabel steuerbare Ausbringung von Düngemitteln mittels einerTeilbreitenschaltung präzise zu gewährleisten, sind eine Vielzahl an pneumatischen Ventilen und elektrischen Sensoren im Bereich der Auslassöffnungen notwendig. Dem Vorteil einer zentralen Anordnung dieser Ventile mit guter Erreichbarkeit steht der Nachteil entgegen, dass hierdurch beengte Bauraumverhältnisse auftreten und Wartungs- oder Reparaturarbeiten erschwert werden bzw. mit einem erheblichen Aufwand verbunden sind.

Es besteht daher ein Bedarf, die Verteilervorrichtung derart zu gestalten, dass ein Austausch der Schneidmesser mit einem geringeren Kraft- und Zeitaufwand möglich ist.

Erfindungsgemäß werden diese Probleme durch eine Verteilervorrichtung mit den Merkmalen des Anspruchs 1 und durch ein Verfahren nach Anspruch 18 gelöst. Die Vorrichtung umfasst ein den Rotor und die Messerantriebswelle verbindendes Verbindungsteil, welches mit dem Rotor und/oder mit der Messerantriebswelle lösbar verbunden ist, wobei eine Bewegung des Rotor durch das Verbindungsteil relativ zu der ersten Lochmesserscheibe geführt wird, und die Verteilerkammer mindestens eine verschließbare Öffnung aufweist, die sich in einer Seitenwand der Verteilervorrichtung befindet, wobei die Öffnung mindestens so groß ausgeführt ist, dass der Rotor durch die Öffnung aus der Verteilerkammer herausnehmbar ist.

Dabei bezeichnet die Einlassöffnung diejenige Öffnung in der Verteilerkammer, durch die eine feststoffhaltige Flüssigkeit in die Verteilerkammer, vorzugsweise mittels eines angeschlossenen Schlauches, eingeführt wird. Über die Anschlussstutzen wird die feststoffhaltige Flüssigkeit, vorzugsweise durch daran angeschlossene Schläuche, aus der Verteilerkammer abgeführt. Die Antriebswellenachse ist definiert als eine virtuelle Linie, die entlang der Drehachse der Messerantriebswelle verläuft und welche die Rotationsachse der Messerantriebswelle darstellt. Erfindungsgemäß ist unter einem Rotor ein Bauteil, das an einer Stirnseite mit einem Schneidmesser verbunden ist, zu verstehen. Der Rotor wird in eine Bewegung versetzt und hierdurch bewegt sich das mit dem Rotor verbundene Schneidmesser auf einer Bewegungsbahn. Das Verbindungsteil führt hierbei diese Bewegung des Rotors. Diese Führung kann beispielsweise bewirkt werden, indem das Verbindungsteil den Rotor an einer Antriebswelle befestigt. Unter einer Bewegungsbahn ist erfindungsgemäß beispielsweise eine Kreisbahn oder eine Exzenterbahn zu verstehen. Das Schneidmesser weist mindestens eine Schneidkante auf, welches an der ersten Lochmesserscheibe anliegt. Die Lochmesserscheibe ist eine vorzugsweise auf der zum Rotor weisenden Seite plane Platte, die mehrere Öffnungen aufweist, durch die das Fluid aus der Verteilerkammer zu den Anschlussstutzen strömen kann. Diese Öffnungen bilden dabei auf der zum Schneidmesser weisenden Seite durch ihre Kante Öffnungsschneidkanten aus. Erfindungsgemäß wird das Schneidmesser relativ zur Lochmesserscheibe bewegt und bewirkt hierdurch eine Schneidwirkung durch Scherung der Schneidkante des Schneidmessers an den Öffnungsschneidkanten der Öffnungen in der Lochmesserscheibe. Die Spannvorrichtung ist derart ausgebildet, dass sich zwischen Schneidmesser und Lochmesserscheibe eine Andruckkraft bildet, insbesondere kann diese Andruckkraft mittels der Spannvorrichtung einstellbar sein.

Das Verbindungsteil ist derart mit dem Rotor und/oder der Antriebswelle verbunden, dass es den Rotor in Bezug auf die Antriebswelle um die Antriebswellenachse geführt ist und folglich bei montiertem Verbindungsteil nicht radial in Bezug auf die Antriebswellenachse von der Messerantriebswelle wegbewegbar ist. Nach Lösen, teilweiser oder vollständiger Demontage des Verbindungsteils wird erfindungsgemäß diese Führung um die Antriebswellenachse aufgehoben, sodass der Rotor radial in Bezug auf die Antriebswellenachse bewegbar ist. Erfindungsgemäß kann der Rotor, wenn das Verbindungsteil nicht mit dem Rotor und/oder der Messerantriebswelle verbunden ist, also durch radiale Bewegung aus der Verteilerkammer entnommen werden. Dies erfolgt vorzugsweise ohne eine dafür notwendige axiale Bewegung des Rotors. Es kann aber auch eine axiale Bewegung entlang der Antriebswellenachse um eine kurze Distanz erfolgen, wobei als eine solche kurze Distanz eine Strecke verstanden wird, die kleiner als 10%, insbesondere kleiner als 5% der axialen Länge der Verteilerkammer entlang der Antriebswellenachse oder senkrecht zur Lochmesserscheibe beträgt - in absoluten Werten bevorzugt weniger als 5cm, weniger als 2,5cm und insbesondere weniger als 1cm oder 0,5cm. Dadurch wird es erfindungsgemäß möglich, den Rotor so zu befestigen und zu lösen, dass er einerseits bei montiertem Verbindungsteil sicher an der Messerantriebswelle geführt, andererseits bei gelöstem/demontiertem Verbindungsteil radial beweglich und dadurch seitlich entnehmbar ist. So kann der Rotor aus einer dafür vorgesehenen Öffnung in der Seitenwand der Verteilerkammer herausgenommen werden. Diese Öffnung ist vorzugsweise mittels eines Deckels, der lösbar mit der Verteilerkammer verbunden ist, verschließbar.

Die vorliegende Erfindung bietet den Vorteil, dass die Stirnwand mit den angeschlossenen Schläuchen nicht von der Verteilerkammer gelöst werden muss und die Schneidmesser einfacher und mit einem im Vergleich zu existierenden Verteilervorrichtungen erheblich geringeren Kraft- und Zeitaufwand zugänglich sind. Hierzu kann die Öffnung in der Seitenwand verwendet werden. Durch das lösbare Verbindungsteil ist die Verbindung zwischen Rotor und Messerantriebswelle einfach und derart lösbar, dass ein radiales Entnehmen des Rotors durch die Öffnung möglich ist.

Des Weiteren bietet die Erfindung im Vergleich zu bekannten Vorrichtungen weitere Vorteile dadurch, dass die Stirnwand während der gesamten Lebensdauer nicht von der Verteilerkammer gelöst werden muss. So kann bei der Montage der Stirnwand eine ausreichend gute Planparallelität zwischen der Stirnwand und damit auch zwischen der Lochmesserscheibe und den Schneidmessern hergestellt werden. Dabei bleibt die Planparallelität über die gesamte Lebensdauer bestehen, da keine Demontage und erneute Montage der Stirnwand notwendig ist und die einmalige Montage unter kontrollierten Bedingungen, insbesondere mit sauberen Oberflächen, neuen Dichtungen und geeigneten Werkzeugen, bei der Erstmontage erfolgt. So wird sowohl ein Verkanten zwischen Lochmesserscheibe und Schneidmesser als auch ein ungleichmäßiger Verschleiß von Schneidmesser und Lochmesserscheibe verhindert.

Darüber hinaus werden durch die Erfindung die Schläuche weniger stark auf Biegung beansprucht, da die Stirnwand und somit auch die Schläuche nicht mehr bewegt werden müssen. So wird zusätzlich durch die geringere Belastung die Lebensdauer der an die Verteilervorrichtung angeschlossen Schläuche erhöht.

Weiter wird eine zusätzliche Zeitersparnis bei der Wartung, insbesondere beim Austausch der Schneidmesser, dadurch erreicht, dass etwaige zusätzliche, direkt an der Stirnwand angeordnete Anbauteile wie sämtliche die elektrische Sensorik und die pneumatischen Ventile Verbindungen nach der initialen Montage ständig mit der Stirnwand verbunden bleiben können, die bei einem Wegbewegen der Stirnwand gelöst werden müssen. Dies bietet insbesondere deshalb einen Vorteil, da die Anzahl solcher Verbindungen in der Vergangenheit stark zugenommen hat und in Zukunft eine weitere Zunahme der Anzahl dieser Verbindungen bei derartigen Verteilervorrichtungen zu erwarten ist, wodurch das Lösen und Verbinden dieser Verbindungen aufgrund der hohen Anzahl mit einem erheblichen Aufwand verbunden ist.

In einer ersten bevorzugten Ausführungsform ist vorgesehen, dass die Spannvorrichtung zwischen einem Spannzustand und einem Entspannungszustand verstellbar ist, wobei in dem Spannzustand eine erste Anpresskraft zwischen dem Schneidmesser und der Lochmesserscheibe besteht und in dem Entspannungszustand eine zweite Anpresskraft zwischen der Lochmesserscheibe und dem Schneidmesser vorhanden ist, wobei die zweite Anpresskraft geringer als die erste Anpresskraft, insbesondere null, ist.

Bei dieser Ausgestaltung kann die Spannvorrichtung entweder manuell oder mittels eines Werkzeuges in den Spannzustand oder in den Entspannungszustand eingestellt werden. Dabei wird im Spannzustand das Schneidmesser auf die Lochmesserscheibe gedrückt, sodass eine Kraft zwischen der Lochmesserscheibe und dem Schneidmesser entsteht. Im Entspannungszustand wird die Kraft zwischen der Lochmesserscheibe und dem Schneidmesser reduziert, sodass entweder eine deutlich geringere Kraft als im Spannzustand oder gar keine Kraft zwischen der Lochmesserscheibe und dem Schneidmesser vorhanden ist. Dabei ist besonders bevorzugt, dass die Spannvorrichtung mindestens eine Schraubenfeder, insbesondere eine Drehfeder, aufweist, wobei die Schraubenfeder zur Übertragung eines Moments mit mindestens einem, vorzugsweise drehbaren, insbesondere exzentrisch drehbar gelagerten, Druckelement und einer Halterung verbunden ist, und das Druckelement in dem Spannzustand mit dem Schneidmesser verbunden ist. Durch eine exzentrische Drehachse des Druckelements kann erreicht werden, dass die Anpresskraft im Spannzustand konstant gehalten wird, auch wenn die Schneidmesser verschleißen und sich durch den Abrieb deren Position relativ zum Rotor verschiebt.

Gemäß einer weiter bevorzugten Ausführungsform ist vorgesehen, dass das Druckelement in dem Entspannungszustand mit einem Sperrelement, vorzugsweise ausgeführt als eine Sperrklinke oder ein Splint, formschlüssig verbunden und in dem Entspannungszustand gehalten wird.

Durch das Fixieren des Sperrelements im Entspannungszustand wird erreicht, dass eine geringe oder gar keine Kraft zwischen Schneidmesser und Lochmesserscheibe vorhanden ist. Der Rotor ist dann, sofern die Verbindung zum Verbindungsteil bzw. der Messerantriebswelle gelöst wurde, radial bewegbar und somit aus der Verteilerkammer herausnehmbar. Die Sperrklinke greift dabei entweder direkt in das Druckelement, insbesondere in eine dafür vorgesehene Position, vorzugsweise ausgebildet als eine Kerbe, oder in ein mit dem Druckelement verbundenes Element ein. Wenn ein Splint verwendet wird, um das Druckelement in dem Entspannungszustand zu halten, so sind hierfür vorzugsweise mindestens ein Loch in dem Druckelement sowie bevorzugt in einem weiteren Element wie beispielsweise einer Halterung ebenfalls mindestens ein Loch vorhanden. So kann der Splint durch das Loch oder die Löcher gesteckt werden, um das Druckelement in Drehrichtung zu blockieren.

Dabei ist es besonders bevorzugt, dass das Druckelement mit einer drehbaren Welle gekoppelt ist, wobei die Welle mit einer Halterung verbunden ist und eine Schnittstelle zum Drehen der Welle aufweist.

Das Druckelement ist dabei mit der drehbaren Welle derart gekoppelt, dass ein Drehen der Welle zu einem Drehen des Druckelements führt. Die Welle ist dabei vorzugsweise an ihren Enden in dafür in der Halterung vorgesehenen Lagerungen positioniert, sodass die Welle im Wesentlichen drehbar bewegbar ist. Die Schnittstelle, beispielsweise ausgeführt in Form eines Innensechskantes, dient dazu, die Welle in die gewünschte Drehrichtung, insbesondere entgegengesetzt zu dem durch eine vorhandene Feder wirkende Moment, drehen zu können, insbesondere um das Druckelement in den Entspannungszustand zu bewegen.

Eine weitere bevorzugte Ausführungsform der Verteilervorrichtung zeichnet sich aus durch eine zweite Lochmesserscheibe mit mehreren Auslassöffnungen, welche den Kammerinnenraum mit mehreren zweiten Anschlussstutzen verbinden, ein zweites Schneidmesser, welches mit dem Rotor verbunden ist und eine Schneidkante aufweist, die an der zweiten Lochmesserscheibe anliegt und mittels des Rotors relativ zu dieser Lochmesserscheibe bewegbar ist, wobei der Rotor zwischen der ersten und der zweiten Lochmesserscheibe angeordnet ist und die Verteilerkammer eine zweite Stirnwand aufweist, an der die mehreren zweiten Anschlussstutzen angeordnet sind.

Bei dieser Ausführungsform wird der Kammerinnenraum axial durch zwei Lochmesserscheiben begrenzt, die vorzugsweise gegenüberliegend angeordnet sind und den Kammerinnenraum zwischen sich einschließen. Durch diese Bauform kann die Anzahl der Auslassöffnungen und damit auch die Anzahl der mit der Verteilerkammer verbundenen Schläuche wesentlich erhöht, insbesondere verdoppelt, werden, weil zwei Stirnwände mit Anschlussstutzen, an denen Schläuche befestigt sind, vorhanden sind. Die Verteilerkammer kann dabei beispielsweise zylinderförmig ausgebildet sein, wobei die Lochmesserscheiben jeweils stirnseitig an der zylinderförmigen Verteilerkammer angeordnet sind. Bevorzugt ist es hierbei, wenn die erste und die zweite Lochmesserscheibe baugleich ausgeführt sind. Weiter ist dabei bevorzugt, wenn das erste und das zweite Schneidmesser baugleich ausgeführt sind.

Der Rotor mit den zwei Schneidmessern kann bei dieser Ausführungsform radial entnommen werden, sodass eine Stirnwand-Demontage nicht erforderlich ist, um Wartungsarbeiten mit Rotorausbau durchzuführen. Ebenso wie bei der zuvor erläuterten Ausführungsform mit einem Schneidmesser kann eine geringe axiale Bewegung des Rotors vorgesehen und notwendig sein, die allerdings unter 5cm, insbesondere unter 2,5 cm oder sogar unter 1cm liegt. Die axiale Bewegung dient folglich auch hier nicht dazu, den Rotor axial von einer Welle abzuziehen, die sich über die gesamte axiale Rotorlänge oder den wesentlichen Teil der Rotorlänge erstreckt. Stattdessen wird gegebenenfalls nur ein geringer axialer Versatz realisiert, der die radiale Entnahme ermöglicht. Zusätzlich und dem axialen Versatz vorgelagert kann eine axiale Verschiebung der Schneidmesser aufeinander zu erfolgen, durch welche der axiale Abstand zwischen den beiden gegenüberliegenden, am Rotor angeordneten Schneidmessern verringert wird. Dies verhindert eine kraft- oder formschlüssige Befestigung des Rotors innerhalb des Gehäuses und ermöglicht eine im Wesentlichen kraftfreie radiale Entnahme des Rotors aus dem Gehäuse.

Noch weiter ist bevorzugt, dass der Rotor derart gelagert ist, dass das erste Schneidmesser auf einer Bewegungsbahn rotierend, vorzugsweise um die Antriebswellenachse, bewegbar ist.

Dabei wird durch die Bewegung des Rotors das Schneidmesser derart bewegt, dass sich die Schneidkante entlang der Auslassöffnungen in der Lochmesserscheibe bewegt und eine Scherwirkung zwischen dem Schneidmesser und der Lochmesserscheibe erzeugt wird, wodurch die sich in der Flüssigkeit befindlichen Feststoffe zerkleinert werden. Der Rotor ist dabei bevorzugt mit dem Verbindungsteil verbunden, welches mit der Messerantriebswelle verbunden ist.

Dabei ist es besonders bevorzugt, dass der Rotor und das Schneidmesser derart gelagert sind, dass eine Rotationsbewegung des Schneidmessers der Bewegung des Rotors auf der Bewegungsbahn überlagert ist.

Bei dieser Ausführungsform ist das Schneidmesser, vorzugsweise drehbar, bewegbar mit dem Rotor verbunden, sodass das Schneidmesser eine von dem Rotor abweichende Bewegung durchführen kann. Insbesondere kann das Schneidmesser eine passive Bewegung durchführen, die sich aufgrund der auf die Schneidmesser auftretenden Belastungen anpasst. So können die Belastungen der Schneidkanten und somit der Verschleiß der Schneidkanten verringert werden.

Eine weitere Ausführungsform sieht vor, dass das Verbindungsteil zur Übertragung eines Drehmoments mit der Messerantriebswelle und/oder mit dem Rotor mittels mindestens einer Schraubverbindung verbunden ist.

Dabei kann zusätzlich zu oder anstelle einer Welle-Nabe-Verbindung zwischen Messerantriebswelle und Verbindungsteil eine Schraubverbindung zur Verbindung zwischen Messerantriebswelle und Verbindungsteil vorhanden sein. Des Weiteren ist bevorzugt, wenn das Verbindungsteil mit dem Rotor mittels einer Schraubverbindung, vorzugsweise mittels 3 oder mehr Schrauben, verbunden ist, um das Drehmoment von dem Verbindungsteil auf den Rotor zu übertragen.

Noch weiter ist bevorzugt, dass die Messerantriebswelle drehmomentfest in Bezug auf die Antriebswellenachse mittels einer Welle-Nabe-Verbindung mit dem Verbindungsteil verbunden ist, und das Verbindungsteil mit dem Rotor verbunden ist.

Dabei ist die Verbindung zwischen der Messerantriebswelle und der Antriebswellenachse derart ausgeführt, dass das Drehmoment auf den Rotor übertragen werden kann. Dabei überträgt die Messerantriebswelle ein Drehmoment vorzugsweise auf das Verbindungsteil, wobei die Verbindung zwischen Messerantriebswelle und Verbindungsteil vorzugsweise als Welle-Nabe-Verbindung, besonders bevorzugt als formschlüssige Verbindung, ausgeführt ist.

Eine bevorzugte Ausführungsform sieht vor, dass die Breite der Öffnung in Richtung der Antriebswellenachse mindestens so groß ist, wie die Summe aus der Länge des Rotors und der Länge des ersten Schneidmessers und vorzugsweise der Länge des zweiten Schneidmessers in Richtung der Antriebswellenachse, und die Höhe der Öffnung, in Richtung senkrecht zu der Antriebswellenachse, mindestens so groß ist, wie die minimale, senkrecht zur Querschnittsfläche der Öffnung projizierte Höhe des Rotors, vorzugsweise mindestens so groß wie der Durchmesser der Lochmesserscheibe um die Antriebswellenachse.

Dabei ist die Öffnung derart gestaltet, dass der Rotor durch die Öffnung herausnehmbar und einsetzbar ist. Dies bietet den Vorteil, dass der Rotor mit dem Schneidmesser aus der Verteilerkammer radial entnommen werden kann, ohne dass hierzu die Stirnwand von der Verteilerkammer abgenommen werden muss.

Eine weitere bevorzugte Ausführungsform zeichnet sich aus durch eine Montagevorrichtung, die lösbar mit der Verteilerkammer, vorzugsweise an der Seitenwand, insbesondere an dem Rand der Öffnung, an mindestens einem Punkt verbindbar ist, wobei die Montagevorrichtung eine Haltevorrichtung, die lösbar mit dem Rotor verbunden ist, um den Rotor an der Montagevorrichtung zu befestigen, sowie vorzugsweise eine Montageöffnung zum Kammerinnenraum, aufweist.

Dabei ist die Montagevorrichtung mit der Verteilerkammer lösbar, beispielsweise mittels einer Schraubverbindung, mit der Verteilerkammer, insbesondere an der Seitenwand, verbindbar. Dabei kann die Montagevorrichtung auf unterschiedlichste Arten mit der Verteilerkammer verbunden werden. Darunter fallen beispielsweise auch das Verbinden durch ein Einhängen oder das Verbinden mittels Schnappverschlüssen. Die Montagevorrichtung kann an der Verteilerkammer angebracht werden und ermöglicht dabei eine Aufnahme des Rotors. Dabei ist der Rotor vorzugsweise lösbar mit der Haltevorrichtung der Montagevorrichtung verbindbar. Der Rotor kann dann mit dem daran verbundenen Schneidmesser mittels der Montagevorrichtung aus der Verteilerkammer entnommen und wieder in die Verteilerkammer eingesetzt werden. Die Haltevorrichtung ist dazu ausgebildet um mit dem Rotor verbunden zu werden, damit der Rotor aus der Verteilerkammer herausnehmbar ist.

Besonders ist es dabei bevorzugt, dass das Verbindungsteil durch die Montageöffnung aus der Verteilerkammer herausnehmbar ist.

Dabei ist die Montageöffnung in der Montagevorrichtung derart ausgeführt, dass das Verbindungsteil durch diese Montageöffnung entnommen werden kann. Des Weiteren ist die Montageöffnung derart gestaltet, dass ein Werkzeug zum Lösen des Verbindungsteils in die Verteilerkammer durch die Montageöffnung eingeführt werden kann, um das Verbindungsteil zu lösen. Vorzugsweise kann dabei die Montagevorrichtung mit der Verteilerkammer verbunden bleiben.

Noch weiter ist bevorzugt, dass die Haltevorrichtung mit dem Rotor zur Montage des Rotors auf einer Position der Bewegungsbahn fixierbar ist.

Dabei ist die Haltevorrichtung derart gestaltet, dass diese, wenn die Montagevorrichtung an der Verteilerkammer angebracht ist, den Rotor in einer Position hält, in der der Rotor mit dem Verbindungsteil verbunden werden kann, sodass der Rotor sich in einer Einbauposition befindet.

Gemäß einer weiteren Ausführungsform ist es bevorzugt, dass die erste Stirnwand der Verteilerkammer stoffschlüssig, insbesondere mittels einer Schweißverbindung, oder formschlüssig mit der Seitenwand verbunden ist.

Bei dieser Ausführungsform ist ein Vorteil, dass die Steifigkeit gegenüber einer Ausführungsform, bei der die Stirnwand mittels einer Schraubverbindung mit der Verteilerkammer verbunden ist, deutlich erhöht ist. Bevorzugt ist dabei eine stoffschlüssige Verbindung, insbesondere eine geschweißte Verbindung zwischen der Stirnwand und der Verteilerkammer vorhanden. In einer weiter bevorzugten Ausführungsform ist eine formschlüssige Verbindung zwischen der Stirnwand und der Seitenwand vorhanden.

In einer weiteren Ausführungsform ist es bevorzugt, dass die erste Stirnwand der Verteilerkammer mit mehreren Schraubverbindungen mit der Seitenwand befestigt ist.

Dabei werden mehrere, insbesondere 3-20, besonders bevorzugt 5-12, Schrauben verwendet, um die Stirnwand mit der Verteilerkammer lösbar zu verbinden.

Eine weitere bevorzugte Ausführungsform zeichnet sich dadurch aus, dass ein O-Ring zur Abdichtung der Verteilerkammer zwischen der ersten Stirnwand und der Seitenwand angeordnet ist.

Dabei befindet sich der O-Ring in einer dafür in der Verteilerkammer und/oder in der Stirnwand vorhandenen Nut. Mit dem O-Ring kann die Verbindung zwischen der Verteilerkammer und der Stirnwand derart abgedichtet werden, dass keine Flüssigkeit zwischen der Verteilerkammer und der Stirnwand austreten kann.

In einer weiteren bevorzugten Ausführungsform ist vorgesehen, dass das erste Schneidmesser eine Form mit mehreren, vorzugsweise drei, abgerundeten Ecken aufweist, wobei der Abstand zwischen mindestens einem Punkt auf der Außenkontur des Schneidmessers und dem Mittelpunkt des Schneidmessers mindestens so groß ist, wie der Abstand zwischen dem Mittelpunkt der Lochmesserscheibe und dem äußeren Rand einer der Auslassöffnungen, wobei der Abstand zwischen mindestens einem Punkt auf der Außenkontur des Schneidmessers und dem Mittelpunkt des Schneidmessers mindestens so klein ist, wie der Abstand zwischen dem Mittelpunkt der Lochmesserscheibe und dem inneren Rand einer der Auslassöffnungen.

Dabei ist das Schneidmesser vorzugsweise derart gestaltet, dass beim Anliegen der Schneidmesser an der Lochmesserscheibe in jeder Position des Schneidmessers mehrere Auslassöffnungen in der Lochmesserscheibe von dem Schneidmesser bedeckt sind, insbesondere derart bedeckt, dass durch diese Auslassöffnungen keine Flüssigkeit im Sinne der Anwendung austreten kann. Weiter ist das Schneidmesser vorzugsweise derart gestaltet, dass beim Anliegen der Schneidmesser an der Lochmesserscheibe in jeder Position des Schneidmessers mehrere Auslassöffnungen in der Lochmesserscheibe zumindest nicht komplett von dem Schneidmesser bedeckt sind, sodass diese Auslassöffnungen in der Lochmesserscheibe mit der Verteilerkammer verbunden sind und Flüssigkeit durch diese Auslassöffnungen austreten kann.

Gemäß eines weiteren Aspekts der vorliegenden Erfindung wird die eingangs genannte Aufgabe gelöst durch ein Verfahren zur Wartung einer Verteilervorrichtung für feststoffhaltige Flüssigkeiten, wobei das Wartungsverfahren umfasst: Lösen einer Verbindung zwischen einem Rotor und einer Antriebswelle, welche in einer Verteilerkammer zur Übertragung eines Drehmoments gekoppelt sind, sodass der Rotor in der Verteilerkammer bewegbar ist, und Entnehmen des Rotors aus der Verteilerkammer durch eine Öffnung, die in der Seitenwand der Verteilerkammer angeordnet ist.

Bei diesem Verfahren wird in einem Schritt die Verbindung zwischen dem Rotor und der Antriebswelle gelöst, vorzugsweise durch Lösen der Verbindung zwischen einem Verbindungsteil und der Antriebswelle und der Verbindung zwischen diesem Verbindungsteil und dem Rotor. Wenn die Verbindung zwischen Rotor und Messerantriebsachse gelöst ist, so kann der Rotor innerhalb der Verteilerkammer radial bewegt werden. In einem weiteren Schritt ist der Rotor aus der Verteilerkammer herausnehmbar, wobei der Rotor durch die Öffnung hindurchgeführt und so radial aus der Verteilerkammer herausbewegt werden kann.

Bevorzugt ist dabei insbesondere das Lösen der Verbindung zwischen einer Lochmesserscheibe und dem Kammerinnenraum, und Entnehmen der Lochmesserscheibe aus der Verteilerkammer durch die Öffnung.

Hierbei kann die Verbindung zwischen einer Lochmesserscheibe und der Verteilerkammer innerhalb der Verteilerkammer gelöst werden und die Lochmesserscheibe aus der Verteilerkammer durch die, sich vorzugsweise in der Seitenwand befindliche, Öffnung entnommen werden.

Noch weiter ist bevorzugt das Befestigen einer Fertigungshilfe mit der Verteilerkammer, wobei die Fertigungshilfe einen Anschlag zur Montage einer Stirnwand aufweist. Die Fertigungshilfe dient dabei als Hilfselement zur Montage der Stirnwand an der Verteilerkammer.

Dabei wird die Fertigungshilfe mit der Verteilerkammer derart verbunden, dass die Fertigungshilfe eine verbesserte Montage der Stirnwand ermöglicht. Die Fertigungshilfe wird innerhalb der Verteilerkammer platziert und fixiert.

Noch weiter ist bevorzugt das Ansetzen der Stirnwand an die Verteilerkammer, sodass die Stirnwand die Fertigungshilfe berührt und in einer Ebene ausgerichtet ist, welche senkrecht zu einer Antriebswellenachse angeordnet ist.

Dabei ist ein Anschlag der Fertigungshilfe während eines Montageprozesses vorzugsweise derart in Kontakt mit der Stirnwand, dass die Stirnwand in der gewünschten Orientierung an der Verteilerkammer fixiert wird. Somit erleichtert die Fertigungshilfe eine korrekte Positionierung der Stirnwand. Weiter kann eine nachteilige Schiefstellung der Stirnwand durch Verwendung der Fertigungshilfe verhindert werden.

Noch weiter ist bevorzugt das Anziehen von mehreren Schraubverbindungen, um die Verteilerkammer zu verschließen, wobei auf jede der Schraubverbindungen ein definiertes Drehmoment oder ein definierter Drehwinkel aufgebracht wird, vorzugsweise mittels eines geeigneten Werkzeuges wie beispielsweise ein Drehmomentschlüssel.

Dabei werden die Schrauben vorzugsweise in einer bestimmten Reihenfolge derart angezogen, dass die Dichtung zwischen Verteilerkammer und Stirnwand nicht beschädigt wird und zusätzlich im verbundenen Zustand die Stirnwand in der gewünschten Positionierung befindlich ist. Für die Montage sollte vorzugsweise auf die Schrauben ein bestimmtes Moment aufgebracht oder die Schraube um einen bestimmten Winkel gedreht werden. Hierzu sollte vorzugsweise ein hierfür geeignetes Werkzeug verwendet werden.

Durch dieses kontrollierte Anziehen der Schraubenverbindungen wird erreicht, dass die Schrauben der Schraubenverbindung mit im Wesentlichen gleich großen Drehmomenten beaufschlagt sind und folglich auch mit entsprechend gleich großen Drehmomenten gelöst werden können. Durch dieses Verfahren wird weiterhin ein umlaufend konstanter Spalt, in dem eine Dichtung angeordnet sein kann, zwischen der Stirnwand und der Verteilerkammer erzielt. Des Weiteren wird die Dichtung zwischen Verteilerkammer und Stirnwand entlang der Dichtung gleichmäßig belastet bzw. herrscht über die gesamte Kontaktfläche zwischen Stirnwand und der Verteilerkammer ein gleichmäßiger Druck.

Eine bevorzugte Ausführungsform der Erfindung wird anhand der beiliegenden Figuren beschrieben. Es zeigen:
- Figur 1:: Eine längsgeschnittene Seitenansicht einer bevorzugten Ausführungsform einer erfindungsgemäßen Verteilervorrichtung,
- Figur 2a:: Eine dreidimensionale Ansicht der Verteilervorrichtung mit entnommenem Verbindungsteil und halb-herausgeführtem Rotor,
- Figur 2b:: Eine dreidimensionale Ansicht der Verteilervorrichtung mit entnommenem Verbindungsteil, entnommenem Rotor und entnommenen Lochmesserscheiben,
- Figur 3:: Eine quergeschnittene Ansicht der ersten bevorzugten Ausführungsform mit Darstellung einer Haltevorrichtung entlang der Linie III-III in Figur 1,
- Figur 4a:: Eine Detailansicht von einer eingebauten Spannvorrichtung im Entspannungszustand,
- Figur 4b:: Eine Draufsicht der Spannvorrichtung,
- Figur 4c:: Eine Detailansicht der Spannvorrichtung mit schematisch gezeigter Anpresskraft,
- Figur 4d-e:: Zwei Ansichten eines Ausschnittes der Spannvorrichtung mit Funktionsweise eines Splints.

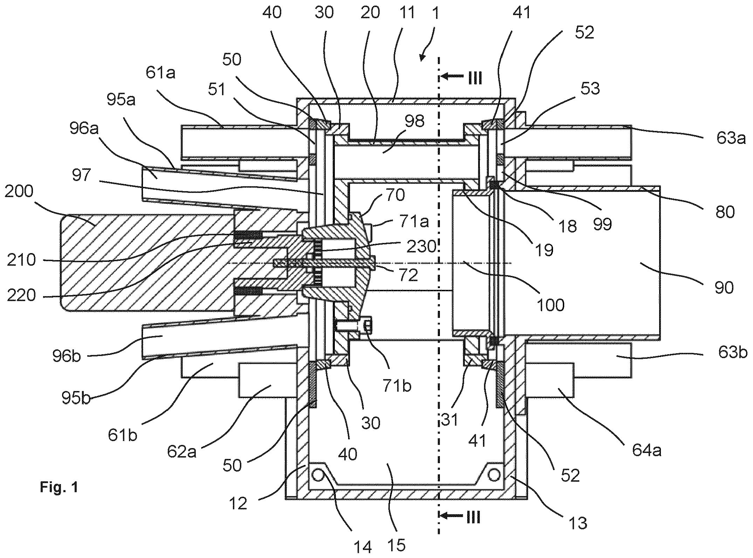

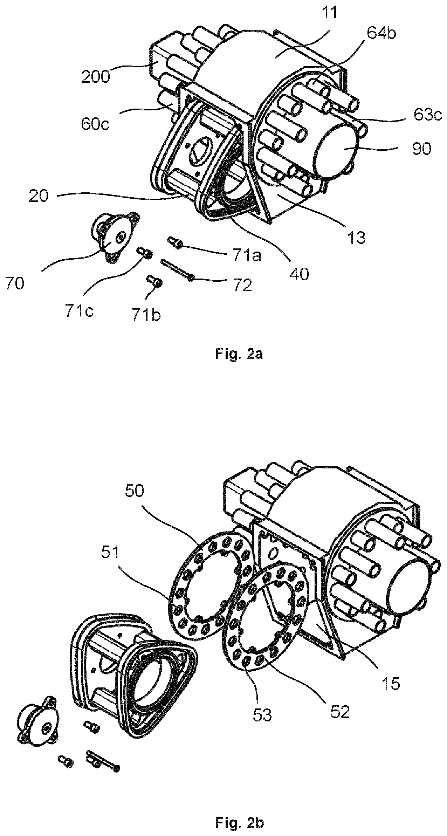

In Figur 1 ist eine Verteilervorrichtung 1 gezeigt, welche eine im Wesentlichen zylindrische Form aufweist und eine Verteilerkammer 11 besitzt, die eine erste Stirnwand 12 und eine zweite Stirnwand 13, sowie eine Öffnung 15 in einer Seitenwand, die insbesondere auch in Fig. 2b erkennbar ist, aufweist. Die Stirnwände sind seitlich zu der Seitenwand angeordnet. Am Rand der Öffnung befindet sich ein Befestigungsloch 14 zur Befestigung einer Montagevorrichtung (nicht gezeigt) oder zur Befestigung eines Deckels (nicht gezeigt) zum Verschließen der Öffnung. An der Verteilerkammer 11 ist ein Einlassstutzen 80 befestigt, der eine Einlassöffnung 90 aufweist, durch welche die feststoffhaltige Flüssigkeit in die Verteilerkammer 11 eingeleitet wird.

Die Messerantriebswelle 220 ist mit einem Antriebsmotor 200 mittels einer Schraube 72 verbunden, sodass von dem Antriebsmotor über eine Welle-Nabe-Verbindung ein Drehmoment auf die Messerantriebswelle übertragen wird. Die Schraube 72 fixiert den Rotor in seiner axialen Position. Die Messerantriebswelle führt eine Rotation um die Antriebswellenachse 100 durch und ist mit einer Lagerung 210 gelagert. Über die Schraube 72 ist ein Verbindungsteil 70 mit der Messerantriebswelle verbunden. Das Drehmoment von der Messerantriebswelle wird mittels einer Welle-Nabe-Verbindung, vorzugsweise einer formschlüssigen Verbindung, beispielsweise ausgeführt als eine Passverzahnung 230, auf das Verbindungsteil übertragen. Das Verbindungsteil überträgt das Drehmoment auf einen Rotor 20 und ist mit drei Schrauben 71a,b,c mit dem Rotor verbunden.

Der Rotor 20 führt so eine Rotationsbewegung um die Antriebswellenachse 100 aus. Dabei ist die Antriebswellenachse nicht mittig in der Verteilerkammer angeordnet, sondern etwas erhöht positioniert, damit unter dem Rotor im unteren Teil der Verteilerkammer größere Feststoffteile, beispielsweise Steine, aufgefangen und angesammelt werden können. Der Rotor ist verbunden mit einem ersten Schneidmesser 30 mit der Schneidkante 40, wobei die Schneidkante an der ersten Lochmesserscheibe 50, mit sich darin befindlichen Auslassöffnungen 51 anliegt. Die Scherwirkung zwischen der Schneidkante und der Lochmesserscheibe führt zurZerkleinerung der Feststoffe. Die feststoffhaltige Flüssigkeit fließt dann aus der Verteilerkammer 11 durch die Auslassöffnungen der Lochmesserscheibe 51 weiter durch eine Mehrzahl von Anschlussstutzen 61a,b,... und 62a,..., wobei die Anschlussstutzen kreisförmig an der ersten Stirnwand 12 angeordnet sind und die Länge der Anschlussstutzen abwechselnd kürzer und länger ausgeführt sind, um ein Anschließen von Schläuchen an den Anschlussstutzen zu erleichtern.

Auf der gegenüberliegenden Seite des Rotors ist der Rotor verbunden mit einem zweiten Schneidmesser 31 mit der Schneidkante 41, wobei die Schneidkante an der zweiten Lochmesserscheibe 52, mit sich darin befindlichen Auslassöffnungen 53 anliegt. Die Scherwirkung zwischen der Schneidkante und der Lochmesserscheibe führt auch hier zur Zerkleinerung der Feststoffe. Die feststoffhaltige Flüssigkeit fließt dann aus der Verteilerkammer 11 durch die Auslassöffnungen 53 der Lochmesserscheibe weiter durch eine Mehrzahl von Anschlussstutzen 63a,b,... und 64a,..., wobei die Anschlussstutzen kreisförmig an der zweiten Stirnwand 13 angeordnet sind und auch hier die Länge der Anschlussstutzen abwechselnd kürzer und länger ausgeführt sind, um ein Anschließen von Schläuchen an den Anschlussstutzen zu erleichtern.

Zusätzlich zu den Anschlussstutzen sind Lufteinlassstutzen 95a,b,... kreisförmig an der ersten Stirnwand 12 angeordnet. Lufteinlassöffnungen 96a,b,... in den Lufteinlassstutzen ermöglichen den Zutritt von Umgebungsluft in den luftleitenden Raum 97, der sich zwischen dem Rotor 20 und der ersten Stirnwand 12 befindet. Die Umgebungsluft wird so durch die Lufteinlassstutzen in den luftleitenden Raum und dann durch die Auslassöffnungen in der ersten Lochmesserscheibe 51 weiter durch die Anschlussstutzen 61a,b,... und 62a,... geleitet. Zusätzlich wird die Luft durch einen Hohlraum im Rotor 98 hindurch auf die gegenüberliegende Seite geführt, sodass die Umgebungsluft vom luftleitenden Raum 99 durch die Auslassöffnungen in der zweiten Lochmesserscheibe 53 weiter durch die Anschlussstutzen 63a,b,... und 64a,b,... geleitet wird. Der luftleitende Raum 99 ist dabei gegenüber dem Kammerinnenraum mittels eines Dichtungsträgers 19 und einer Dichtung 18 zwischen dem Dichtungsträger und der zweiten Stirnwand 13 abgedichtet, damit die sich in der Verteilerkammer befindliche Flüssigkeit nicht in den luftleitenden Raum eintreten kann.

In Figur 2a ist die Verteilervorrichtung mit entnommenem Verbindungsteil 70 und halb-herausgeführtem Rotor 20 gezeigt. Zum Entnehmen des Rotors wird zunächst die Schraube 72 gelöst, die das Verbindungsteil mit der Messerantriebswelle verbindet. Dann werden die Schrauben 71a,b,c, die das Verbindungsteil mit dem Rotor verbinden, gelöst. Dann können die Schrauben 72 sowie 71a,b,c und das Verbindungsteil 70 durch die Öffnung 15 in der Seitenwand aus der Verteilerkammer 11 herausgeführt werden. Anschließend, und nachdem die Spannvorrichtung in den Entspannungszustand eingestellt wurde, kann der Rotor radial bewegt werden und so radial durch die Öffnung in der Seitenwand geführt werden. In Figur 2b ist der Rotor mit den Schneidmessern bereits entnommen und die Lochmesserscheiben 50 und 52 können ebenfalls durch die Öffnung 15 in der Seitenwand radial aus der Verteilerkammer entnommen werden.

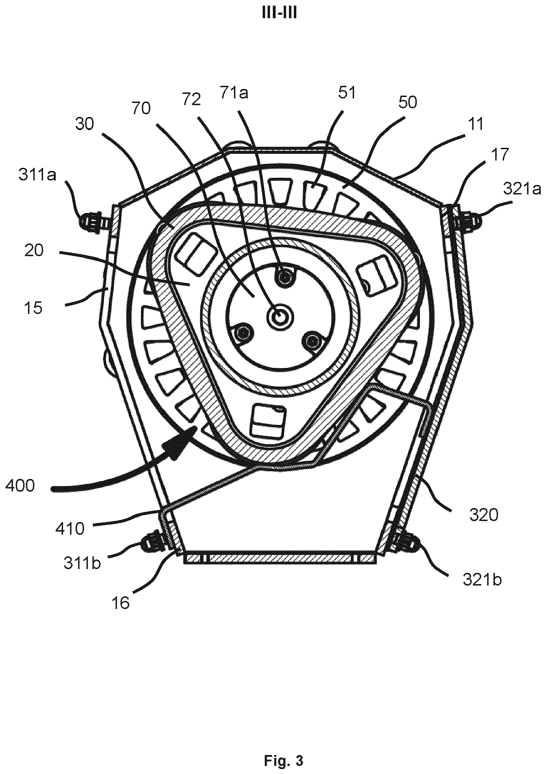

In Figur 3 ist eine quergeschnittene Ansicht der Verteilervorrichtung gezeigt, wobei eine Haltevorrichtung 410 mit der Seitenwand 16 verbunden ist. Die Haltevorrichtung 410 hält dabei den Rotor 20 mit den sich daran befindlichem Schneidmesser 30 in einer Position, in der das Verbindungsteil mit dem Rotor und der Messerantriebswelle montiert oder demontiert werden kann. Der Rotor 20 kann, beispielsweise zusammen mit der Haltevorrichtung 410 durch ein Einsetzen 400 durch die Öffnung 15 in der Seitenwand in die Verteilerkammer in die gewünschte Position gebracht werden, sodass die Schneidkante an der Lochmesserscheibe 50 anliegt. Die Haltevorrichtung 410 ist dabei mittels einer Schraubverbindung 311b mit der Seitenwand 16 der Verteilerkammer 11 verbunden. Des Weiteren ist die Haltevorrichtung mit einem Deckel 320, der eine zweite Öffnung in der zweiten Seitenwand 17 mittels einer Schraubverbindung 321a,b verschließt, verbunden. Wird der Rotor durch die Haltevorrichtung in der gewünschten Position gehalten, so kann das Verbindungsteil 70 mit dem Rotor und der Messerantriebswelle verbunden werden und mit der Schraube 72 mit der Messerantriebswelle und mit den Schrauben 71a,... mit dem Rotor verbunden werden. Nachdem das Verbindungsteil mit dem Rotor und der Messerantriebswelle verbunden wurde, kann die Haltevorrichtung aus der Verteilerkammer durch die Öffnung 15 aus der Verteilerkammer entnommen werden. Die Öffnung kann nun mit einem Deckel (nicht gezeigt), der mittels einer Schraubverbindung 311a,b an der Seitenwand 16 der Verteilerkammer befestigt wird, verschlossen werden.

Analog zu dem vorhandenen Deckel 320, der die Öffnung in der Seitenwand 17 verschließt, wobei der Deckel mit den Schrauben 321a, 321b fixiert wird, kann auch die Öffnung 15 der Seitenwand 16 mit einem derartigen Deckel verschlossen werden, wobei der Deckel mit den Schrauben 311a, 311b befestigt werden kann. In diesem Ausführungsbeispiel sind daher in beiden Seitenwänden Öffnungen vorhanden, die jeweils mittels eines Deckels verschließbar sind.

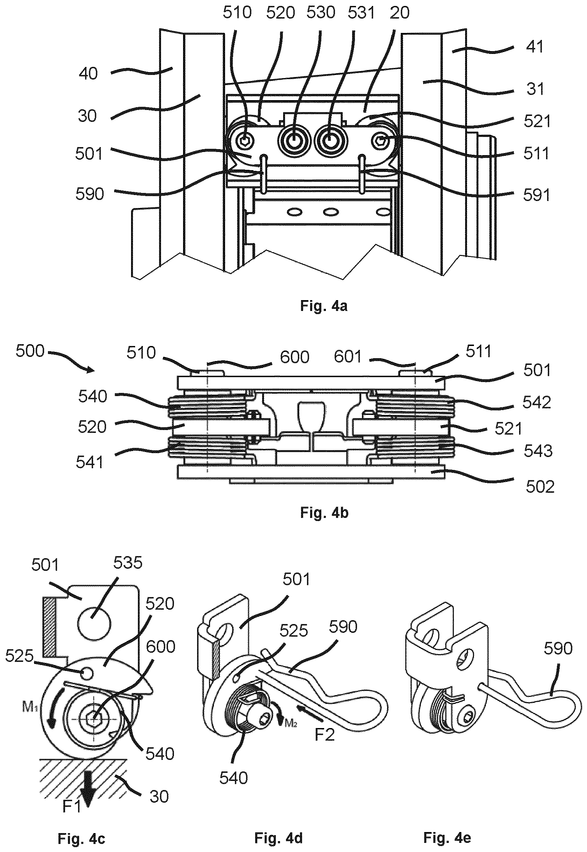

In Figur 4a-e sind mehrere Ansichten von der Spannvorrichtung 500 gezeigt. In Figur 4a ist die Spannvorrichtung im eingebauten Zustand am Rotor 20 im Entspannungszustand gezeigt. Dabei umfasst die Spannvorrichtung Befestigungsschrauben 530 und 531, die sich in den Löchern 535 in der Halterung 501 befinden. Die Befestigungsschrauben verbinden so die Spannvorrichtung mit dem Rotor. Die Spannvorrichtung weist dabei Druckelemente 520 und 521 auf, die jeweils drehbar auf einer Welle um die Achsen 600 und 601 gekoppelt sind. Dabei sind die Wellen jeweils durch die zwei Halterungen 501 und 502, die als getrennte Bauteile oder als ein integrales Bauteil ausgeführt sein können, verbunden. Die Wellen weisen jeweils eine Schnittstelle 510 und 511 ausgeführt als Innensechskant auf, womit die Welle und somit die Druckelemente, beispielsweise mittels einen Innensechskantschlüssels, in die gewünschte Position gedreht werden können. Die Spannvorrichtung weist mehrere Drehfedern 540, 541, 542 und 543 auf, wobei die Drehfedern jeweils zur Übertragung eines Moments mit einem exzentrisch drehbar gelagerten Druckelement 520, 521 sowie einer Halterung 501, 502 verbunden sind. Im Spannzustand sind dann die Druckelemente 520, 521 mit den Schneidmessern 30, 31 verbunden und üben eine Kraft auf diese aus. Daraus resultiert eine Anpresskraft zwischen den Schneidkanten 40, 41 und den Lochmesserscheiben 50, 52. Durch eine exzentrisch drehbare Bewegbarkeit des Druckelements kann erreicht werden, dass die Anpresskraft im Spannzustand konstant gehalten wird, auch wenn die Schneidmesser verschleißen und sich durch den Abrieb die Schneidkanten 40, 41 verkleinern.

In dem Entspannungszustand werden die Druckelemente 520, 521 in einer definierten Position gehalten, indem Splinte 590, 591 jeweils durch ein Loch 525 im Druckelement 520 und ein Loch in der Halterung 501 geführt wird. Werden die Splinte aus der Spannvorrichtung entnommen, so bewirken die Druckelemente aufgrund des anliegenden Moments M1 eine Anpresskraft zwischen den Druckelementen und dem daran anliegenden Schneidmesser 30. Dieser dann vorhandene Spannzustand ist gezeigt in Figur 4c. Figur 4d zeigt schematisch ein Zurückdrehen der Welle und somit des Druckelements, indem ein Moment M2 durch ein Werkzeug aufgebracht wird. Das Druckelement kann so in eine Position, in der der Entspannungszustand herrscht, gedreht werden und diese Position kann anschließend mit einem Splint 590 fixiert werden. Im Entspannungszustand herrscht keine Anpresskraft zwischen den Schneidkanten und den Lochmesserscheiben, sodass der Rotor mit den daran verbundenen Schneidmessern radial bewegbar ist, sofern das Verbindungsteil gelöst und herausgenommen ist. Im Spannungszustand herrscht eine Anpresskraft zwischen den Schneidkanten und den Lochmesserscheiben, sodass bei einer Rotation des Rotors und der Schneidmesser eine Scherbewegung zwischen den Schneidkanten und der Lochmesserscheibe wirkt. Durch die Scherwirkung werden die Feststoffe, die in der Flüssigkeit enthalten sind, zerkleinert und die feststoffhaltige Flüssigkeit kann ohne ein Verstopfen der Schläuche durch zu große Feststoffteile über die an der Verteilervorrichtung angeschlossenen Schläuche ausgebracht werden.

## Patentansprüche

1. Verteilervorrichtung (1) für feststoffhaltige Flüssigkeiten, umfassend
- eine Verteilerkammer (11) mit einer Einlassöffnung (90), die in einen Kammerinnenraum der Verteilerkammer mündet, wobei die Verteilerkammer eine erste Stirnwand (12) mit mehreren Anschlussstutzen (60a,b, 65a,b) und eine seitlich zu der Stirnwand angeordnete erste Seitenwand (16) aufweist,
- eine erste Lochmesserscheibe mit mehreren Auslassöffnungen, welche den Kammerinnenraum mit den mehreren Anschlussstutzen verbinden,
- eine Messerantriebswelle, die drehbar um eine Antriebswellenachse gelagert ist,
- ein Rotor, der mit der Messerantriebswelle zur Übertragung eines Drehmoments um die Messerantriebswelle gekoppelt ist,
- ein erstes Schneidmesser, welches mit dem Rotor verbunden ist und mindestens eine Schneidkante aufweist, welche an der ersten Lochmesserscheibe anliegt und mittels des Rotors relativ zu der Lochmesserscheibe bewegbar ist,
- eine Spannvorrichtung, die ausgebildet ist, um eine Anpresskraft zwischen dem ersten Schneidmesser und der ersten Lochmesserscheibe zu bewirken, und die vorzugsweise mit dem Rotor lösbar verbunden ist,
- wobei
- die Verteilervorrichtung ein den Rotor und die Messerantriebswelle verbindendes Verbindungsteil umfasst, welches mit dem Rotor und/oder mit der Messerantriebswelle lösbar verbunden ist, wobei eine Bewegung des Rotor durch das Verbindungsteil relativ zu der ersten Lochmesserscheibe geführt wird,
- die Verteilerkammer mindestens eine verschließbare Öffnung aufweist, die sich in der ersten Seitenwand befindet, **dadurch gekennzeichnet, dass** die Öffnung mindestens so groß ausgeführt ist, dass der Rotor durch die Öffnung aus der Verteilerkammer herausnehmbar ist.

2. Verteilervorrichtung nach Anspruch 1, **dadurch gekennzeichnet, dass**
- die Spannvorrichtung zwischen einem Spannzustand und einem Entspannungszustand verstellbar ist,
- wobei in dem Spannzustand eine erste Anpresskraft zwischen dem Schneidmesser und der Lochmesserscheibe besteht und in dem Entspannungszustand eine zweite Anpresskraft zwischen der Lochmesserscheibe und dem Schneidmesser vorhanden ist, wobei die zweite Anpresskraft geringer als die erste Anpresskraft, insbesondere null, ist.

3. Verteilervorrichtung nach Anspruch 2, **dadurch gekennzeichnet, dass**
- ein Druckelement in dem Entspannungszustand mit einem Sperrelement, vorzugsweise ausgeführt als eine Sperrklinke oder ein Splint, formschlüssig verbunden und in dem Entspannungszustand gehalten ist.

4. Verteilervorrichtung nach Anspruch 3, **dadurch gekennzeichnet, dass**
- das Druckelement mit einer drehbaren Welle gekoppelt ist, wobei die Welle mit einer Halterung verbunden ist und eine Schnittstelle zum Drehen der Welle aufweist.

5. Verteilervorrichtung nach einem der vorhergehenden Ansprüche, **gekennzeichnet durch**
- eine zweite Lochmesserscheibe mit mehreren Auslassöffnungen, welche den Kammerinnenraum mit mehreren zweiten Anschlussstutzen verbinden,
- ein zweites Schneidmesser, welches mit dem Rotor verbunden ist und mindestens eine Schneidkante aufweist, die an der zweiten Lochmesserscheibe anliegt und mittels des Rotors relativ zu dieser Lochmesserscheibe bewegbar ist,
- wobei der Rotor zwischen der ersten und der zweiten Lochmesserscheibe angeordnet ist und die Verteilerkammer eine zweite Stirnwand aufweist, an der die mehreren zweiten Anschlussstutzen angeordnet sind.

6. Verteilervorrichtung nach einem der vorhergehenden Ansprüche, **dadurch gekennzeichnet, dass**
- der Rotor derart gelagert ist, dass das erste Schneidmesser auf einer Bewegungsbahn rotierend, vorzugsweise um die Antriebswellenachse, bewegbar ist.

7. Verteilervorrichtung nach einem der vorhergehenden Ansprüche, **dadurch gekennzeichnet, dass**
- der Rotor und das Schneidmesser derart gelagert sind, dass eine Rotationsbewegung des Schneidmessers der Bewegung des Rotors auf der Bewegungsbahn überlagert ist.

8. Verteilervorrichtung nach einem der vorhergehenden Ansprüche, **dadurch gekennzeichnet, dass**
- das Verbindungsteil zur Übertragung eines Drehmoments mit der Messerantriebswelle und/oder mit dem Rotor mittels mindestens einer Schraubverbindung verbunden ist.

9. Verteilervorrichtung nach einem der vorhergehenden Ansprüche, **dadurch gekennzeichnet, dass**
- die Messerantriebswelle drehmomentfest in Bezug auf die Antriebswellenachse mittels einer Welle-Nabe-Verbindung mit dem Verbindungsteil verbunden ist, und das Verbindungsteil mit dem Rotor verbunden ist.

10. Verteilervorrichtung nach einem der vorhergehenden Ansprüche, **dadurch gekennzeichnet, dass**
- die Breite der Öffnung in Richtung der Antriebswellenachse mindestens so groß ist, wie die Summe aus der Länge des Rotors und der Länge des ersten Schneidmessers und vorzugsweise der Länge des zweiten Schneidmessers in Richtung der Antriebswellenachse, und
- die Höhe der Öffnung, in Richtung senkrecht zu der Antriebswellenachse, mindestens so groß ist, wie die minimale, senkrecht zur Querschnittsfläche der Öffnung projizierte Höhe des Rotors, vorzugsweise mindestens so groß wie der Durchmesser der Lochmesserscheibe um die Antriebswellenachse.

11. Verteilervorrichtung nach einem der vorhergehenden Ansprüche, **gekennzeichnet durch**
- eine Montagevorrichtung, die lösbar mit der Verteilerkammer, vorzugsweise an der Seitenwand, insbesondere an dem Rand der Öffnung, an mindestens einem Punkt verbindbar ist,
- wobei die Montagevorrichtung eine Haltevorrichtung, die lösbar mit dem Rotor verbunden ist, um den Rotor an der Montagevorrichtung zu befestigen, sowie vorzugsweise eine Montageöffnung zum Kammerinnenraum, aufweist.

12. Verteilervorrichtung nach Anspruch 11, **dadurch gekennzeichnet, dass**
- das Verbindungsteil durch die Montageöffnung aus der Verteilerkammer herausnehmbar ist.

13. Verteilervorrichtung nach einem der Ansprüche 11-12, **dadurch gekennzeichnet, dass**
- die Haltevorrichtung mit dem Rotor zur Montage des Rotors auf einer Position der Bewegungsbahn fixierbar ist.

14. Verteilervorrichtung nach einem der vorhergehenden Ansprüche, **dadurch gekennzeichnet, dass**
- die erste Stirnwand der Verteilerkammer stoffschlüssig, insbesondere mittels einer Schweißverbindung, oder form- und/oder kraftschlüssig mit der Seitenwand verbunden ist.

15. Verteilervorrichtung nach einem der vorhergehenden Ansprüche, **dadurch gekennzeichnet, dass**
- die erste Stirnwand der Verteilerkammer mit mehreren Schraubverbindungen mit der Seitenwand befestigt ist.

16. Verteilervorrichtung nach einem der vorhergehenden Ansprüche, **dadurch gekennzeichnet, dass**
- ein O-Ring zur Abdichtung der Verteilerkammer zwischen der ersten Stirnwand und der Seitenwand angeordnet ist.

17. Verteilervorrichtung nach einem der vorhergehenden Ansprüche, **dadurch gekennzeichnet, dass**
- das erste Schneidmesser eine Form mit mehreren, vorzugsweise drei, abgerundeten Ecken aufweist,
- wobei der Abstand zwischen mindestens einem Punkt auf der Außenkontur des Schneidmessers und dem Mittelpunkt des Schneidmessers mindestens so groß ist, wie der Abstand zwischen dem Mittelpunkt der Lochmesserscheibe und dem äußeren Rand einer der Auslassöffnungen,
- wobei der Abstand zwischen mindestens einem Punkt auf der Außenkontur des Schneidmessers und dem Mittelpunkt des Schneidmessers mindestens so klein ist, wie der Abstand zwischen dem Mittelpunkt der Lochmesserscheibe und dem inneren Rand einer der Auslassöffnungen.

18. Verfahren zur Wartung und Fertigung einer Verteilervorrichtung für feststoffhaltige Flüssigkeiten, vorzugsweise einer Verteilervorrichtung nach Anspruch 1, wobei das Wartungsverfahren umfasst:
- Lösen einer Verbindung zwischen einem Rotor und einer Antriebswelle, welche in einer Verteilerkammer zur Übertragung eines Drehmoments gekoppelt sind, sodass der Rotor in der Verteilerkammer bewegbar ist,
- **gekennzeichnet durch** das radiale Entnehmen des Rotors aus der Verteilerkammer durch eine Öffnung, die in der Seitenwand der Verteilerkammer angeordnet ist.

19. Wartungs- und Fertigungsverfahren nach Anspruch 18, wobei das Wartungsverfahren umfasst:
- Lösen der Verbindung zwischen einer Lochmesserscheibe und dem Kammerinnenraum,
- Entnehmen der Lochmesserscheibe aus der Verteilerkammer durch die Öffnung.

20. Wartungs- und Fertigungsverfahren nach Anspruch 18 oder 19, wobei das Wartungsverfahren umfasst:
- Befestigen einer Fertigungshilfe mit der Verteilerkammer, wobei die Fertigungshilfe einen Anschlag zur Montage einer Stirnwand aufweist.

21. Wartungs- und Fertigungsverfahren nach einem der Ansprüche 18-20, wobei das Wartungsverfahren umfasst:
- Ansetzen der Stirnwand an die Verteilerkammer, sodass die Stirnwand die Fertigungshilfe berührt und in einer Ebene ausgerichtet ist, welche senkrecht zu einer Antriebswellenachse angeordnet ist.

22. Wartungs- und Fertigungsverfahren nach einem der Ansprüche 18-21, wobei das Wartungsverfahren umfasst:
- Anziehen von mehreren Schraubverbindungen, um die Verteilerkammer zu verschließen, wobei auf jede der Schraubverbindungen ein definiertes Drehmoment oder ein definierter Drehwinkel aufgebracht wird, vorzugsweise mittels eines geeigneten Werkzeugs, wie beispielsweise ein Drehmomentschlüssel.

## Claims

1. Distributor device (1) for liquids containing solids, comprising
- a distribution chamber (11) having an inlet port (90) opening into a chamber interior of the distribution chamber, the distribution chamber having a first end wall (12) with a plurality of connection ports (60a, b, 65a,b) and a first side wall (16) arranged laterally to the end wall,
- a first perforated knife disc having a plurality of outlet ports connecting the chamber interior to the plurality of connecting ports,
- a blade drive shaft, which is rotatably mounted around a drive shaft axis,
- a rotor coupled to the blade drive shaft for transmitting torque about the blade drive shaft,
- a first cutting blade connected to the rotor and having at least one cutting edge which is attached to the first perforated knife disc and is movable by means of the rotor relative to the perforated knife disc,
- a clamping device which is designed to effect a contact pressure between the first cutting blade and the first perforated knife disc, and which is preferably detachably connected to the rotor,
- where
- the distributor device comprises a connecting part connecting the rotor and the blade drive shaft, said connecting part being detachably connected to the rotor and/or to the blade drive shaft, wherein a movement of the rotor is guided by the connecting part relative to the first perforated knife disc,
- the distributor chamber has at least one closable opening, which is located in the first side wall,
**characterized in that** the opening is at least as large such that the rotor can be removed from the distributor chamber through the opening.

2. Distributor device according to claim 1, **characterized in that**
- the clamping device is adjustable between a clamping state and a release state,
- wherein in the clamping state there is a first contact pressure between the cutting blade and the perforated knife disc and in the release state there is a second contact pressure between the perforated knife disc and the cutting blade, wherein the second contact pressure is lower than the first contact pressure, in particular zero.

3. Distributor device according to claim 2, **characterized in that** a pressure element is form-lockingly connected in the release state to a locking element, preferably in the form of a locking pawl or a cotter pin, and is held in the release state.

4. Distributor device according to claim 3, **characterized in that** the pressure element is coupled to a rotatable shaft, the shaft being connected to a support and having an interface for rotating the shaft.

5. Distribution device according to any one of the preceding claims, **characterized by**
- a second perforated knife disc having a plurality of outlet ports connecting the chamber interior to a plurality of second connecting ports,
- a second cutting blade connected to said rotor and having at least one cutting edge abutting said second perforated knife disc and movable relative to said perforated knife disc by means of said rotor,
wherein the rotor is disposed between the first and second perforated knife discs, and the distribution chamber has a second end wall on which the plurality of second connecting ports are disposed.

6. Distributor device according to any one of the preceding claims, **characterized in that**
- the rotor is mounted in such a way that the first cutting blade can be moved in a rotational path of movement, preferably about the drive shaft axis.

7. Distributor device according to any one of the preceding claims, **characterized in that** the rotor and the cutting blade are journaled in such a way that a rotational movement of the cutting blade is superimposed on the movement of the rotor on the movement path.

8. Distributor device according to any one of the preceding claims,
**characterized in that**
the connecting part for transmitting a torque is connected to the blade drive shaft and/or to the rotor by means of at least one screw connection.

9. Distributor device according to any one of the preceding claims,
**characterized in that**
the blade drive shaft is connected to the connecting part for torque transmission with respect to the drive shaft axis by means of a shaft-hub connection, and the connecting part is connected to the rotor.

10. Distributor device according to any one of the preceding claims, **characterized in that**
- the width of the opening in the direction of the drive shaft axis is at least as large as the sum of the length of the rotor and the length of the first cutting blade and preferably the length of the second cutting blade in the direction of the drive shaft axis, and
- the height of the opening, in the direction perpendicular to the drive shaft axis, is at least as great as the minimum height of the rotor projected perpendicular to the cross-sectional area of the opening, preferably at least as great as the diameter of the perforated knife disc about the drive shaft axis.

11. Distributor device according to any one of the preceding claims, **characterized by**
- an asssembling device which can be detachably connected to the distribution chamber, preferably on the side wall, in particular on the edge of the opening, at at least one point,
- wherein the asssembling device comprises a retaining device releasably connected to the rotor for securing the rotor to the asssembling device, and preferably a asssembling opening to the chamber interior.

12. Distributor device according to claim 11, **characterized in that** the connecting part can be removed from the distribution chamber through the asssembling opening.

13. Distributor device according to any one of claims 11-12, **characterized in that**
the retaining device can be fixed with the rotor for mounting the rotor on a position of the movement path.

14. Distributor device according to any one of the preceding claims,
**characterized in that**
the first end wall of the distributor chamber is connected to the side wall by a material bond, in particular by means of a welded joint, or by a form-fit and/or force-fit.

15. Distributor device according to any one of the preceding claims, **characterized in that** the first end wall of the distributor chamber is fastened to the side wall with a plurality of screw connections.

16. Distributor device according to any one of the preceding claims,
**characterized in that**
a O-ring for sealing the distribution chamber is arranged between the first end wall and the side wall.

17. Distributor device according to any one of the preceding claims, **characterized in that**
- the first cutting blade has a shape with several, preferably three, rounded corners,
- wherein the distance between at least one point on the outer contour of the cutting blade and the center of the cutting blade is at least as great as the distance between the center of the perforated knife disc and the outer edge of one of the outlet openings,
- wherein the distance between at least one point on the outer contour of the cutting blade and the center of the cutting blade is at least as small as the distance between the center of the perforated knife disc and the inner edge of one of the outlet openings.

18. Method of maintaining and fabricating a distribution device for solids-containing fluids, preferably a distribution device according to claim 1, wherein the maintenance method comprises:
- disconnecting a connection between a rotor and a drive shaft which are coupled in a distributor chamber for transmitting a torque so that the rotor is movable in the distributor chamber,
**characterized by** radially removing the rotor from the distribution chamber through an opening located in the side wall of the distribution chamber.

19. The maintenance and manufacturing method of claim 18, wherein the maintenance method comprises:
- releasing the connection between a perforated knife disc and the chamber interior,
- removing the perforated knife disc from the distribution chamber through the opening.

20. The maintenance and manufacturing method of claim 18 or 19, wherein the maintenance method comprises:
- attaching a fabrication aid to the distribution chamber, the fabrication aid having a stop for mounting an end wall.

21. The maintenance and manufacturing method of any one of claims 18-20, wherein the maintenance method comprises:
- attaching the end wall to the distribution chamber, so that the end wall contacts the manufacturing aid and is aligned in a plane that is perpendicular to a drive shaft axis.

22. The maintenance and manufacturing method of any one of claims 18-21, wherein the maintenance method comprises:
- tightening a plurality of screw connections to close the manifold chamber, applying a defined torque or angle of rotation to each of the screw connections, preferably using a suitable tool such as a torque wrench.

## Revendications

1. Dispositif de distribution (1) pour liquides contenant des solides, comprenant
- une chambre de distribution (11) avec une ouverture d'entrée (90), qui débouche dans un espace intérieur de chambre de la chambre de distribution, dans lequel la chambre de distribution présente une première paroi frontale (12) avec plusieurs tubulures de raccordement (60a,b 65a,b) et une première paroi latérale (16) disposée de manière latérale par rapport à la paroi frontale,
- un premier disque à lames perforé avec plusieurs ouvertures de sortie, lesquelles relient l'espace intérieur de chambre aux plusieurs tubulures de raccordement,
- un arbre d'entraînement de lame, qui est monté de manière à pouvoir tourner autour d'un axe d'arbre d'entraînement,
- un rotor, qui est couplé à l'arbre d'entraînement de lame pour transmettre un couple de rotation autour de l'arbre d'entraînement de lame,
- une première lame tranchante, laquelle est reliée au rotor et présente au moins une arête tranchante, laquelle repose sur le premier disque à lames perforé et peut être déplacée par rapport au disque à lames perforé au moyen du rotor,
- un dispositif de serrage, qui est réalisé pour entraîner une force de compression entre la première lame tranchante et le premier disque à lames perforé, et qui est relié de manière amovible de préférence au rotor,
- dans lequel
- le dispositif de distribution comprend une partie de liaison reliant le rotor et l'arbre d'entraînement de lame, laquelle est reliée de manière amovible au rotor et/à l'arbre d'entraînement de lame, dans lequel un déplacement du rotor est guidé par la partie de liaison par rapport au premier disque à lames perforé,
- la chambre de distribution présente au moins une ouverture pouvant être fermée, qui se trouve dans la première paroi latérale, **caractérisé en ce que**
l'ouverture est réalisée au moins assez grande pour que le rotor puisse être retiré de la chambre de distribution par l'ouverture.

2. Dispositif de distribution selon la revendication 1, **caractérisé en ce que**
- le dispositif de serrage peut être ajusté entre un état de serrage et un état de desserrage,
- dans lequel, dans l'état de serrage, une première force de compression existe entre la lame tranchante et le disque à lames perforé et, dans l'état de desserrage, une deuxième force de compression existe entre le disque à lames perforé et la lame tranchante, dans lequel la deuxième force de compression est inférieure à la première force de compression, en particulier est nulle.

3. Dispositif de distribution selon la revendication 2, **caractérisé en ce que**
- un élément de pression est relié par complémentarité de forme, dans l'état de desserrage, à un élément de verrouillage, réalisé de préférence en tant qu'un cliquet de verrouillage ou une goupille et est maintenu dans l'état de desserrage.

4. Dispositif de distribution selon la revendication 3, **caractérisé en ce que**
- l'élément de pression est couplé à un arbre rotatif, dans lequel l'arbre est relié à une fixation et présente une interface pour faire tourner l'arbre.

5. Dispositif de distribution selon l'une quelconque des revendications précédentes, **caractérisé par**
- un deuxième disque à lames perforé avec plusieurs ouvertures de sortie, lesquelles relient l'espace intérieur de chambre à plusieurs deuxièmes tubulures de raccordement,
- une deuxième lame tranchante, laquelle est reliée au rotor et présente au moins une arête tranchante, qui repose sur le deuxième disque à lames perforé et peut être déplacée par rapport audit disque à lames perforé au moyen du rotor,
- dans lequel le rotor est disposé entre le premier disque à lames perforé et le deuxième disque à lames perforé et la chambre de distribution présente une deuxième paroi frontale, sur laquelle les plusieurs deuxièmes tubulures de raccordement sont disposées.

6. Dispositif de distribution selon l'une quelconque des revendications précédentes, **caractérisé en ce que**
- le rotor est monté de telle manière que la première lame tranchante peut être déplacée par rotation sur une voie de déplacement, de préférence autour de l'axe d'arbre d'entraînement.

7. Dispositif de distribution selon l'une quelconque des revendications précédentes, **caractérisé en ce que**
- le rotor et la lame tranchante sont montés de telle manière qu'un déplacement par rotation de la lame tranchante se superpose au déplacement du rotor sur la voie de déplacement.

8. Dispositif de distribution selon l'une quelconque des revendications précédentes, **caractérisé en ce que**
- la partie de liaison est reliée au moyen d'au moins une liaison par vissage à l'arbre d'entraînement de lame et/ou au rotor pour la transmission d'un couple de rotation.

9. Dispositif de distribution selon l'une quelconque des revendications précédentes, **caractérisé en ce que**
- l'arbre d'entraînement de lame est relié de manière solidaire au couple de rotation par rapport à l'axe d'arbre d'entraînement au moyen d'une liaison arbre-moyeu à la partie de liaison, et la partie de liaison est reliée au rotor.

10. Dispositif de distribution selon l'une quelconque des revendications précédentes, **caractérisé en ce que**
- la largeur de l'ouverture dans le sens de l'axe d'arbre d'entraînement est au moins aussi grande que la somme de la longueur du rotor et de la longueur de la première lame tranchante et de préférence de la longueur de la deuxième lame tranchante en direction de l'axe d'arbre d'entraînement, et
- la hauteur de l'ouverture, en direction perpendiculaire par rapport à l'axe d'arbre d'entraînement, est au moins aussi grande que la hauteur du rotor minimale projetée de manière perpendiculaire à la surface de section transversale de l'ouverture, de préférence est au moins aussi grande que le diamètre du disque à lames perforé autour de l'axe d'arbre d'entraînement.

11. Dispositif de distribution selon l'une quelconque des revendications précédentes, **caractérisé par**
- un dispositif de montage, qui peut être relié de manière amovible à la chambre de distribution, de préférence sur la paroi latérale, en particulier sur le bord de l'ouverture, sur au moins un point,
- dans lequel le dispositif de montage présente un dispositif de maintien, qui est relié de manière amovible au rotor pour fixer le rotor sur le dispositif de montage, ainsi que de préférence une ouverture de montage menant à l'espace intérieur de chambre.

12. Dispositif de distribution selon la revendication 11, **caractérisé en ce que**
- la partie de liaison peut être retirée de la chambre de distribution par l'ouverture de montage.

13. Dispositif de distribution selon l'une quelconque des revendications 11 - 12, **caractérisé en ce que**
- le dispositif de maintien peut être bloqué sur une position de la voie de déplacement avec le rotor pour le montage du rotor.

14. Dispositif de distribution selon l'une quelconque des revendications précédentes, **caractérisé en ce que**
- la première paroi frontale de la chambre de distribution est reliée par liaison de matière, en particulier au moyen d'une liaison par soudage, ou par complémentarité de forme et/ou à force à la paroi latérale.

15. Dispositif de distribution selon l'une quelconque des revendications précédentes, **caractérisé en ce que**
- la première paroi frontale de la chambre de distribution est fixée avec la paroi latérale avec plusieurs liaisons par vissage.

16. Dispositif de distribution selon l'une quelconque des revendications précédentes, **caractérisé en ce que**
- un joint torique est disposé pour l'étanchéification de la chambre de distribution entre la première paroi frontale et la paroi latérale.

17. Dispositif de distribution selon l'une quelconque des revendications précédentes, **caractérisé en ce que**
- la première lame tranchante présente une forme avec plusieurs, de préférence trois, coins arrondis,
- dans lequel la distance entre au moins un point sur le contour extérieur de la lame tranchante et le point central de la lame tranchante est au moins aussi grande que la distance entre le point central du disque à lames perforé et le bord extérieur d'une des ouvertures de sortie,
- dans lequel la distance entre au moins un point sur le contour extérieur de la lame tranchante et le point central de la lame tranchante est au moins aussi petite que la distance entre le point central du disque à lames perforé et le bord intérieur d'une des ouvertures de sortie.

18. Procédé de maintenance et de production d'un dispositif de distribution pour des liquides contenant des solides, de préférence d'un dispositif de distribution selon la revendication 1, dans lequel le procédé de maintenance comprend :
- le détachement de la liaison entre un rotor et un arbre d'entraînement, lesquels sont couplés dans une chambre de distribution pour la transmission d'un couple de rotation si bien que le rotor peut être déplacé dans la chambre de distribution,
- **caractérisé par** le retrait radial du rotor de la chambre de distribution par une ouverture, qui est disposée dans la paroi latérale de la chambre de distribution.

19. Procédé de maintenance et de production selon la revendication 18, dans lequel le procédé de maintenance comprend :
- le détachement de la liaison entre un disque à lames perforé et l'espace intérieur de chambre,
- le retrait du disque à lames perforé de la chambre de distribution par l'ouverture.

20. Procédé de maintenance et de production selon la revendication 18 ou 19, dans lequel le procédé de maintenance comprend :
- la fixation d'une aide à la production avec la chambre de distribution, dans lequel l'aide à la production présente une butée pour le montage d'une paroi frontale.

21. Procédé de maintenance et de production selon l'une quelconque des revendications 18 - 20, dans lequel le procédé de maintenance comprend :
- le placement de la paroi frontale sur la chambre de distribution si bien que la paroi frontale touche l'aide à la production et est orientée dans un plan qui est disposé de manière perpendiculaire par rapport à un axe d'arbre d'entraînement.

22. Procédé de maintenance et de production selon l'une quelconque des revendications 18 - 21, dans lequel le procédé de maintenance comprend :
- le serrage de plusieurs liaisons par vissage pour fermer la chambre de distribution, dans lequel est appliqué sur chacune des liaisons par vissage un couple de rotation défini ou un angle de rotation défini, de préférence au moyen d'un outil adapté, comme une clé dynamométrique.
